# EUROPÄISCHE PATENTANMELDUNG

(11) **EP 0 642 818 A2**
(43) Veröffentlichungstag der Anmeldung: **15.03.1995**
(21) Anmeldenummer: 94106621.9
(22) Anmeldetag: 28.04.1994
(51) Int. Cl.: B01D 35/28

(54) **Überströmsieb**

(30) Priorität: 15.09.1993 DE 4331107
(71) Anmelder: Hein, Lehmann Trenn- und Fördertechnik GmbH, D-40233 Düsseldorf (DE)
(72) Erfinder: Krüger, Horst, D-42719 Solingen (DE); Eickholt, Harald, D-40470 Düsseldorf (DE)
(74) Vertreter: COHAUSZ HASE DAWIDOWICZ & PARTNER

(57) **Zusammenfassung**

Die Erfindung betrifft ein Überströmsieb insbesondere Bogensieb mit einem gewölbten Siebbelag, über dessen konkave Oberfläche das Feststoff-Flüssigkeitsgemisch fließt, wobei der Siebbelag ein Schlitzlochblech ist, dessen Schlitze eine Breite von < 1,0 mm und eine Länge von 0,5 bis 4 mm haben.

## Beschreibung

Die Erfindung betrifft ein Überströmsieb insbesondere Bogensieb mit einem gewölbten Siebbelag, über dessen konkave Oberfläche das Feststoff-Flüssigkeitsgemisch fließt.

Es ist bekannt, Überströmsiebe insbesondere Bogensiebe mit einem Spaltsieb zu versehen, das aus einzelnen im Querschnitt etwa dreieckförmigen Profilen besteht, die nebeneinander auf eine Stützkonstruktion aufgeschweißt sind und je nach dem zu siebenden Flüssigkeits/Feststoffgemisch schmalere oder breitere Spalten zwischen sich bilden. Diese Spaltsiebe sind aufwendig in Konstruktion und Montage und werden beim Austausch zusammen mit der Stützkonstruktion ausgewechselt. Ferner ist die Anpassungsfähigkeit an unterschiedliche Beschaffenheiten des zu siebenden Gutes begrenzt.

Aufgabe der Erfindung ist es, ein Überströmsieb der eingangsgenannten Art so zu verbessern, daß es bei einfacher Herstellung, Montage und Auswechselbarkeit den unterschiedlichsten Siebgütern einfach und preiswert angepaßt werden kann. Auch ist es Aufgabe der Erfindung, die offene Fläche des Siebes weitgehend frei zu halten.

Diese Aufgabe wird erfindungsgemäß dadurch gelöst, daß der Siebbelag ein Schlitzlochblech ist, dessen Schlitze eine Breite von < 1,0 mm und eine Länge von 0,5 bis 4 mm haben. Alternativ wird vorgeschlagen, daß der Siebbelag ein Feinlochblech ist, dessen nicht rund Löcher einen Durchmesser von < 2,0 mm haben.

Es müssen damit für ein Überströmsieb insbesondere für ein Bogensieb keine speziellen Siebbeläge hergestellt, sondern es werden Schlitzlochbleche bzw. Feinlochbleche verwendet, die bereits für andere Siebzwecke produziert und verwendet werden. Diese ansich für andere Siebzwecke bekannten Siebbeläge liegen bereits in den unterschiedlichsten Arten vor, so daß eine große Auswahl für die verschiedensten Feststoff/Flüssigkeitsgemische besteht. Je nach Anwendungsfall wird das Schlitzlochblech bzw. das Feinlochblech verwendet, das die günstigsten Siebergebnisse zeigt.

Besonders vorteilhaft ist es, wenn die Löcher eine dreieckförmige bis halbeliptische Form besitzen und die Oberseite um die Löcher schuppenartige Erhebungen aufweist und die Rückseite keine Erhebungen besitzt. Hierdurch wird ein besonders günstiger Durchsatz erzielt.

Eine von Anlagerungen fast völlig freie Sieboberfläche wird erreicht, wenn diese entgrated, geschliffen und poliert ist. Auch ist zu den obengenannten Vorteilen besonders günstig, wenn die Löcher sich zur Siebrückseite hin erweitern.

Ein guter Halt und die Sicherheit, daß die Siebbeläge ruhig liegen und damit nicht frühzeitig zerstört werden, ist dann gewahrleistet, wenn der Siebbelag auf einer gitterförmigen Stützkonstruktion aufliegt. Hierbei sollte der Siebbelag zum Auswechseln lösbar befestigt sein. Von größtem Vorteil ist es, wenn die Sieblöcher/-schlitze in ihrer Größe insbesondere Breite sich mit der Entfernung von der Siebgutaufgabestelle ändern.

Die Schlitze bleiben weitgehend frei, d.h. sie werden durch die darunter angeordneten stützenden Profile nicht teilweise geschlossen, bzw. überdeckt, wenn der Siebbelag auf Profilen aufliegt, die zueinander parallel sind und einen insbesondere dreieckförmigen Querschnitt besitzen, wobei die Siebbelagsunterseite auf einer durchlaufenden oberen Kante des Profils linienförmig aufliegt.

Ausführungsbeispiele der Erfindung sind in den Zeichnungen dargestellt und werden im folgenden näher beschrieben. Es zeigen
- Figur 1:: Eine Draufsicht auf das Stützgitter des Überströmsiebes.
- Figur 2:: Eine Seitenansicht des Überströmsiebes.
- Figur 3:: Einen vergrößerten Ausschnitt III aus Figur 2.
- Figur 4:: Einen stark vergrößerten Schnitt durch ein Schlitzlochblech.
- Figur 5:: Einen stark vergrößerten Schnitt durch ein Feinlochblech.
- Figur 6:: Oberansicht und Schnitt durch ein Feinlochblech.
- Figur 7:: Oberansicht, Unteransicht und Schnitte durch ein alternatives Feinlochblech und
- Figur 8:: Oberansicht, Unteransicht und Schnitte durch ein Schlitzlochblech.

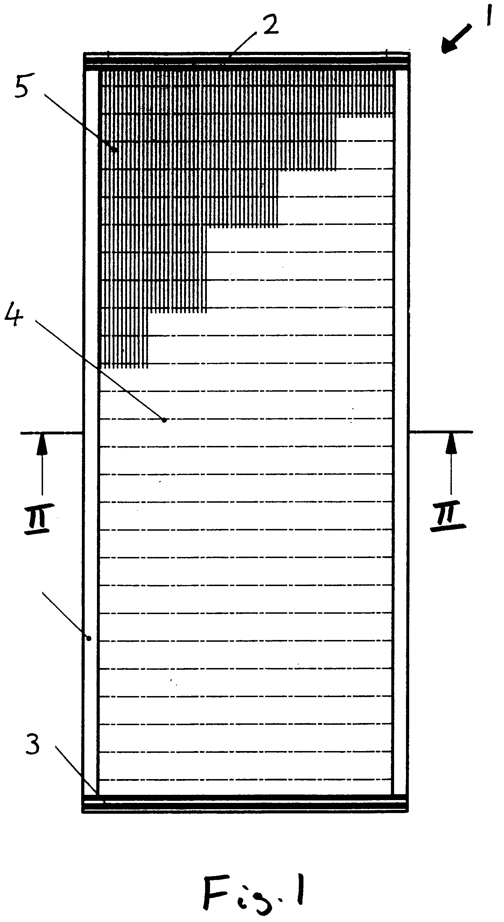

Das Überströmsieb 1 besitzt im Ausführungsbeispiel die Form eines Bogensiebes, das sich zwischen einer ersten Schiene 2 und einer zweiten Schiene 3 mit jeweils L-förmigen Querschnitt erstreckt. Zwischen den Schienen 2,3 ist eine gitterförmige Unterstützungskonstruktion aus im Querschnitt dreieckförmigen Profilen 4 befestigt, auf die der Siebbelag 5 von oben aufgelegt wird und lösbar durch Schrauben 6 an den Schienen 2 befestigt ist. Damit braucht der Siebrahmen nur einmalig in eine Anlage eingebaut zu werden, um dort dann zu bleiben, da er keinem Verschleiß ausgesetzt ist. Nur der Siebbelag, d.h. die Siebbleche werden ausgewechselt. Die Anlage des Bleches auf den Profilen 4 ist linienförmig. Damit besteht eine geringe Abdeckung der offenen Fläche.

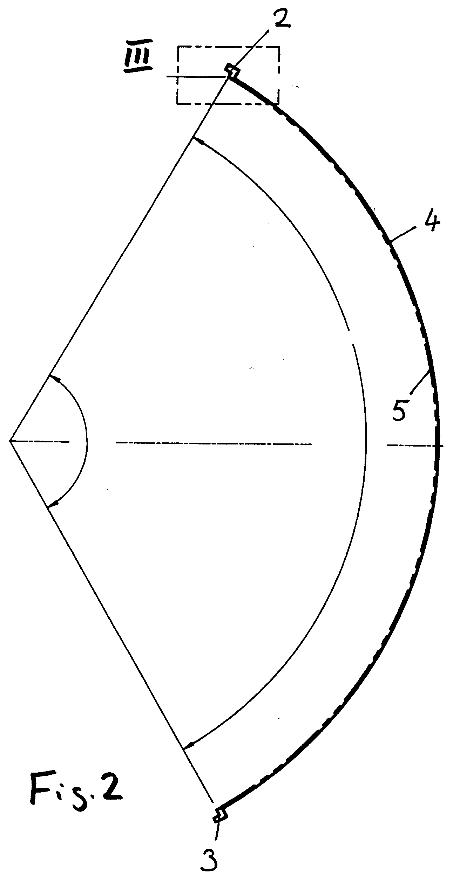

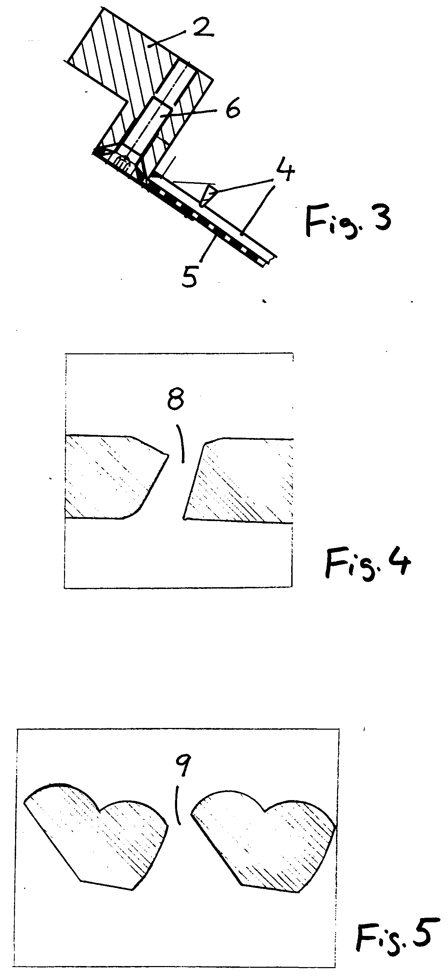

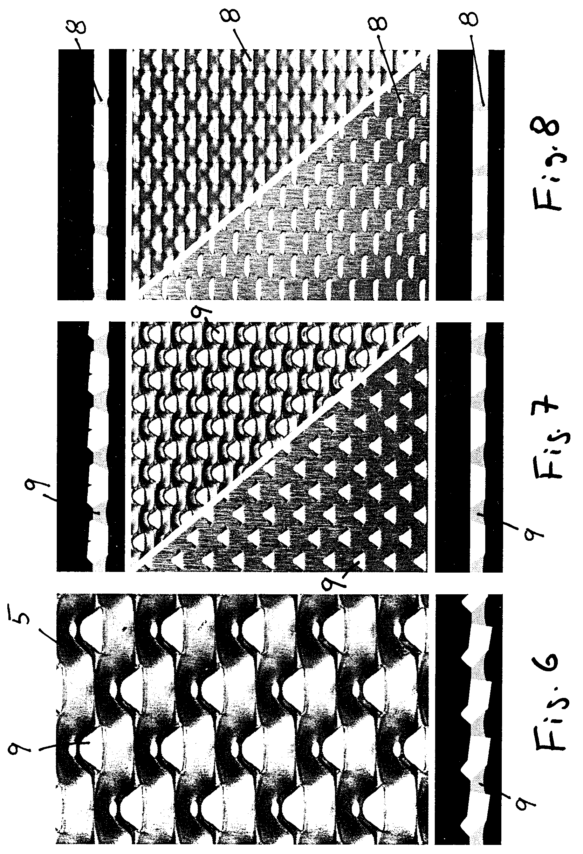

In einem ersten Ausführungsbeispiel wird der Siebbelag von einem Schlitzlochblech gebildet, dessen Schlitze eine Breite von 0,06 bis 0,9 mm und eine Länge von 0,5 bis 4 mm haben. Ein solches Schlitzlochblech ist von der Vorder- und Rückseite als auch im Schnitt in Figur 8 vergrößert dargestellt und ferner zeigt Figur 4 eine sehr starke Vergrößerung einer Öffnung eines Schlitzlochbleches im Querschnitt.

Alternativ kann als Siebbelag auch ein Feinlochblech verwendet werden, dessen nicht runde Löcher einen Durchmesser von 0,06 bis 2,0 mm haben. Hierbei besitzen die Öffnungen eine dreieckförmige bis halbeliptische Form und die Oberseite des Feinlochblechs weist um die Löcher schuppenartige Erhebungen auf, so daß durch diese Erhebungen Flüssigkeit in die Löcher geleitet wird, wie dies in den Figuren 6 und 7 dargestellt ist. Die Rückseite ist dagegen glatt.

In beiden Ausführungsformen erweitern sich die Löcher zur Siebrückseite hin, wie dies die Figuren 4 bis 8 zeigen. Zumindest die Oberseite des Siebbleches ist entgrated und poliert. Ferner kann die Lochgröße insbesondere die Lochbreite sich mit der Entfernung von der Siebgutaufgabestelle ändern insbesondere größer werden, um eine noch bessere Siebleistung und damit eine verbesserte Entwässerung zu erreichen.

Besonders vorteilhaft ist hierbei, daß das Siebblech einstückig ausgeführt sein kann und damit als ein einziges Teil sich von der ersten Schiene 2 bis zur zweiten Schiene 3 erstreckt. Hierbei kann das Siebblech auf viererlei verschiedene Weise eingesetzt werden, d.h. es kann zum einen so gedreht werden, daß der an der ersten Schiene anliegende Bereich, danach an der zweiten Schiene anliegt und ferner kann die Rückseite zur Vorderseite gedreht werden. Damit kann nicht nur die Siebart und Siebleistung verändert werden, sondern es kann auch ein stärker verschlissener Bereich durch einen weniger beanspruchten Bereich ersetzt werden.

Ein solches Überströmsieb insbesondere Bogensieb ist besonders vorteilhaft bei den unterschiedlichsten Feststoff/Flüssigkeitsseperationen einsetzbar, wie z.B. dem Trennen von Fasern, Granulaten und Klärschlamm.

## Patentansprüche

1. Überströmsieb insbesondere Bogensieb mit einem gewölbten Siebbelag (5), über dessen konkave Oberfläche das Feststoff-Flüssigkeitsgemisch fließt, **dadurch gekennzeichnet,** daß der Siebbelag (5) ein Schlitzlochblech ist, dessen Schlitze (8) eine Breite von < 1,0 mm und eine Länge von 0,5 bis 4 mm haben.

2. Überströmsieb insbesondere Bogensieb mit einem gewölbten Siebbelag (5), über dessen konkave Oberfläche das Feststoff-Flüssigkeitsgemisch fließt, **dadurch gekennzeichnet,** daß der Siebbelag (5) ein Feinlochblech ist, dessen nicht runde Löcher (9) einen Durchmesser von < 2 mm haben.

3. Überströmsieb nach Anspruch 2, **dadurch gekennzeichnet,** daß die Löcher eine dreieckförmige bis halbeliptische Form besitzen.

4. Überströmsieb nach einem der vorherigen Ansprüche, **dadurch gekennzeichnet,** daß die Oberseite um die Löcher (9) schuppenartige Erhebungen aufweist und die Rückseite keine Erhebungen besitzt.

5. Überströmsieb nach einem der vorherigen Ansprüche, **dadurch gekennzeichnet,** daß die Oberfläche des Siebbelags (5) entgrated und poliert ist.

6. Überströmsieb nach einem der vorherigen Ansprüche, **dadurch gekennzeichnet,** daß die Löcher (9) bzw. Schlitze (8) sich zur Siebrückseite hin erweitern.

7. Überströmsieb nach einem der vorherigen Ansprüche, **dadurch gekennzeichnet,** daß der Siebbelag (5) auf einer gitterförmigen Stützkonstruktion (4) linienförmig aufliegt.

8. Überströmsieb nach einem der vorherigen Ansprüche, **dadurch gekennzeichnet,** daß der Siebbelag (5) zum Auswechseln lösbar befestigt ist.

9. Überströmsieb nach einem der vorherigen Ansprüche, **dadurch gekennzeichnet,** daß die Sieblöcher/-schlitze (8, 9) in ihrer Größe insbesondere Breite sich mit der Entfernung von der Siebgutaufgabestelle ändern.

10. Überströmsieb nach einem der vorherigen Ansprüche, **dadurch gekennzeichnet,** daß der Siebbelag auf Profilen aufliegt, die zueinander parallel sind und einen insbesondere dreieckförmigen Querschnitt besitzen, wobei die Siebbelagsunterseite auf einer durchlaufenden oberen Kante des Profils linienförmig aufliegt.
